# EUROPEAN PATENT SPECIFICATION

(11) **EP 4 216 515 B1**
(45) Date of publication and mention of the grant of the patent: **11.11.2026**
(21) Application number: 22204535.3
(22) Date of filing: 05.09.2018
(51) Int. Cl.: H04L 67/1097, G06F 3/06, H04L 67/63, H04L 41/12

(54) **METHOD AND APPARATUS FOR TRANSMITTING DATA PROCESSING REQUEST**
VERFAHREN UND VORRICHTUNG ZUR ÜBERTRAGUNG EINER DATENVERARBEITUNGSANFRAGE
PROCÉDÉ ET APPAREIL DE TRANSMISSION DE DEMANDE DE TRAITEMENT DE DONNÉES

(30) Priority: 06.09.2017 CN 201710803285
(43) Date of publication of application: 26.07.2023
(62) Document number(s) of the earlier application(s) in accordance with Art. 76 EPC: 18855012.3 / 3 668 056
(73) Proprietor: Huawei Technologies Co., Ltd., Shenzhen, Guangdong 518129, (CN)
(72) Inventor: ZHOU, Jianhua, Shenzhen, 518129 (CN); ZHOU, Meng, Shenzhen, 518129 (CN); TANG, Kun, Shenzhen, 518129 (CN)
(74) Representative: Pfenning, Meinig & Partner mbB

(56) References cited:
- EP-A1- 2 711 841
- US-A1- 2016 124 880

## Description

### TECHNICAL FIELD

This application relates to the communications field, and more specifically, to a method for transmitting a data processing request, a network interface card, a storage node and a system.

### BACKGROUND

As a size of data gradually increases, a requirement of people for a storage device is increasing. To meet the requirement of people for the storage device, network storage becomes a common data storage manner in a current storage system. A special dedicated data storage system is defined in a network storage technology. A cross-platform file sharing function can be implemented in the storage system. Specifically, network storage forms include direct attached storage (Direct Attached Storage, DAS), network attached storage (Network Attached Storage, NAS), a storage area network (Storage Area Network, SAN), and the like.

The storage system based on the network storage technology may include a plurality of storage nodes, and the plurality of storage nodes may access, by using a first network interface card disposed inside the storage node, a network to be connected to a host. In other words, in the storage system, the host may access a storage device in any storage node by using the network. When the host needs to access a storage device in a storage node (namely, a second storage node) in the storage system, the host needs to access the storage device in the second storage node through an access path formed by hardware devices such as a central processing unit (Central Processing Unit, CPU) in the second storage node and a first network interface card of the second storage node.

However, if the storage device of the second storage node can be accessed only through the access path formed by the CPU of the second storage node and the first network interface card in the second storage node, when the CPU of the second storage node cannot process a data access request in a timely manner, the host cannot access the second storage node in a timely manner, or when the access path on the second storage node is faulty, the host cannot access the storage device of the second storage node.

US 2016/124880 describes methods and systems for efficiently processing input/output requests in which a network interface card (NIC) is coupled to a storage device via a peripheral link and accessible to a processor of a computing device executing instructions out of a memory device. EP 2 711 841 A1 discloses a distributed block-storage data processing approach in which a service processing node receives a client's data operation request, selects a target storage node (e.g., by logical address), forwards the request, and the storage node processes it under CPU control using a cache and non-volatile storage.

### SUMMARY

This application provides a method for transmitting a data processing request, to improve a success rate of accessing a storage device in a second storage node. The scope of protection of the present invention is defined by the appended claims.

According to a first aspect, a method for transmitting a data processing request is provided, and is applied to a storage system, where the storage system includes a first storage node and a second storage node, a storage device in the first storage node is connected to a host by using a processor and a first network interface card of the first storage node, and is connected to a storage device of the second storage node by using a second network interface card, and the method includes: receiving, by the first storage node, a data processing request to access the storage device of the second storage node, where the data processing request carries a target storage address of to-be-processed data; determining, by the first storage node, the second storage node based on the target storage address of the to-be-processed data; and sending, by the first storage node, the data processing request to the second storage node by using the second network interface card, where the data processing request instructs the second storage node to process the to-be-processed data.

In this embodiment of this application, the data processing request may be processed in the first storage node, and the processed data processing request is sent to a switching unit in the second storage node by using a switching unit in the first storage node, to access the storage device in the second storage node, thereby avoiding a problem that a storage device corresponding to a target storage address can be accessed only through an access path inside the second storage node in the prior art, and improving a success rate of accessing the target storage address in the second storage node.

With reference to the first aspect, in a possible manner of the first aspect, the target storage address includes an identifier of the second storage node and a logical address that is in the storage device of the second storage node and that is used to store the to-be-processed data.

The identifier of the storage node is directly carried in the target address, so that the first storage node can directly determine the second storage node based on the target address, thereby simplifying complexity of determining the second storage node by the first storage node.

With reference to the first aspect, in a possible manner of the first aspect, the storage system includes a plurality of storage nodes, and storage address ranges corresponding to different storage nodes in the plurality of storage nodes are not overlapped; and the determining, by the first storage node, the second storage node based on the target storage address of the to-be-processed data includes: determining, by the first storage node based on the target storage address, a storage address range to which the target storage address belongs; and determining, by the first storage node, the second storage node based on the storage address range to which the target storage address belongs and a correspondence between a storage address range in the storage system and a storage node in the storage system.

The target storage address is carried only in the data processing request. This helps reduce overheads caused by signaling transmission.

With reference to the first aspect, in a possible manner of the first aspect, the storage system includes a plurality of storage nodes, and identifiers of storage devices in different storage nodes in the plurality of storage nodes are different. The data processing request carries an identifier of a storage device in which the target storage address of the to-be-processed data is located. Step 450 further includes: determining, by the first storage node based on the target storage address, a storage device corresponding to the target storage address, and determining, by the first storage node, the second storage node based on an identifier of the storage device corresponding to the target storage address and a correspondence between an identifier of a storage device and a storage node in the storage system.

With reference to the first aspect, in a possible manner of the first aspect, the method further includes: receiving, by the first storage node, the correspondence that is between a storage address range in the storage system and a storage node in the storage system and that is sent by the host.

According to a second aspect, a method for transmitting a data processing request is provided, and is applied to a host. The host is connected to a storage system, the storage system includes at least two storage nodes, each storage node is connected to the host by using a first network interface card, and is connected to another storage node by using a second network interface card. The method includes: obtaining, by the host, a topological relationship of storage nodes connected by using the second network interface card in the storage system; when a preset condition is detected, determining, by the host, a first storage node in the at least two storage nodes based on the topological relationship, where the host accesses a second storage node by using the first storage node; and sending, by the host to the first storage node, a data processing request used to access a storage device of the second storage node.

In this embodiment of this application, the data processing request may be processed in the first storage node, and the processed data processing request is sent to a switching unit in the second storage node by using a switching unit in the first storage node, to access the storage device in the second storage node, thereby avoiding a problem that a storage device corresponding to a target storage address can be accessed only through an access path inside the second storage node in the prior art, and improving a success rate of accessing the target storage address in the second storage node.

With reference to the second aspect, in a possible implementation of the second aspect, the method further includes: sending, by the host, a correspondence between a storage address range in the storage system and a storage node in the storage system to the first storage node.

According to a third aspect, an apparatus for transmitting a data processing request is provided. The apparatus includes modules configured to perform any one of the first aspect or the possible implementations of the first aspect.

According to a fourth aspect, an apparatus for transmitting a data processing request is provided. The apparatus includes modules configured to perform any one of the second aspect or the possible implementations of the second aspect.

According to a fifth aspect, an apparatus for transmitting a data processing request is provided, including a transceiver, a processor, and a memory. The processor is configured to control the transceiver to send a signal and receive a signal. The memory is configured to store a computer program. The processor is configured to invoke the computer program from the memory and run the computer program, so that the apparatus for transmitting a data processing request performs the method in the first aspect.

According to a sixth aspect, an apparatus for transmitting a data processing request is provided, including a transceiver, a processor, and a memory. The processor is configured to control the transceiver to send a signal and receive a signal. The memory is configured to store a computer program. The processor is configured to invoke the computer program from the memory and run the computer program, so that the apparatus for transmitting a data processing request performs the method in the second aspect.

According to a seventh aspect, a computer program product is provided, and the computer program product includes computer program code. When the computer program code runs on a computer, the computer is enabled to perform the methods in the foregoing aspects.

According to an eighth aspect, a computer readable medium is provided, and the computer readable medium stores program code. When the computer program code runs on a computer, the computer is enabled to perform the methods in the foregoing aspects.

According to a ninth aspect, a chip system is provided. The chip system includes a processor that is used by an apparatus for transmitting a data processing request to implement functions in the foregoing aspects, for example, a function of generating, receiving, sending, or processing data and/or information in the foregoing methods. In a possible design, the chip system further includes a memory. The memory is configured to store a program instruction and data that are necessary for a terminal device. The chip system may include a chip, or may include a chip and another discrete device.

According to a tenth aspect, a chip system is provided. The chip system includes a processor that is used to support an apparatus for transmitting a data processing request in implementing functions in the foregoing aspects, for example, a function of generating, receiving, sending, or processing data and/or information in the foregoing methods. In a possible design, the chip system further includes a memory. The memory is configured to store a program instruction and data that are necessary for a network device. The chip system may include a chip, or may include a chip and another discrete device.

### BRIEF DESCRIPTION OF DRAWINGS

FIG. 1 is a schematic block diagram of a conventional storage system based on a storage network;
FIG. 2 is a schematic block diagram of a storage system based on a network storage technology according to an embodiment of this application;
FIG. 3 is a schematic block diagram of a storage system based on a network storage technology according to another embodiment of this application;
FIG. 4 is a schematic flowchart of a method for transmitting a data processing request according to an embodiment of this application;
FIG. 5 is a schematic flowchart of a method for transmitting a data processing request in a data access scenario according to an embodiment of this application;
FIG. 6 is a schematic flowchart of a method for transmitting a data processing request in a data migration scenario according to an embodiment of this application;
FIG. 7 is a schematic block diagram of an apparatus for transmitting a data processing request according to an embodiment of this application;
FIG. 8 is a schematic block diagram of an apparatus for transmitting a data processing request according to another embodiment of this application;
FIG. 9 is a schematic block diagram of an apparatus for transmitting a data processing request according to an embodiment of this application; and
FIG. 10 is a schematic block diagram of an apparatus for transmitting a data processing request according to another embodiment of this application.

### DESCRIPTION OF EMBODIMENTS

The following describes technical solutions of this application with reference to accompanying drawings.

For ease of understanding, a conventional method for transmitting a data processing request is first briefly described.

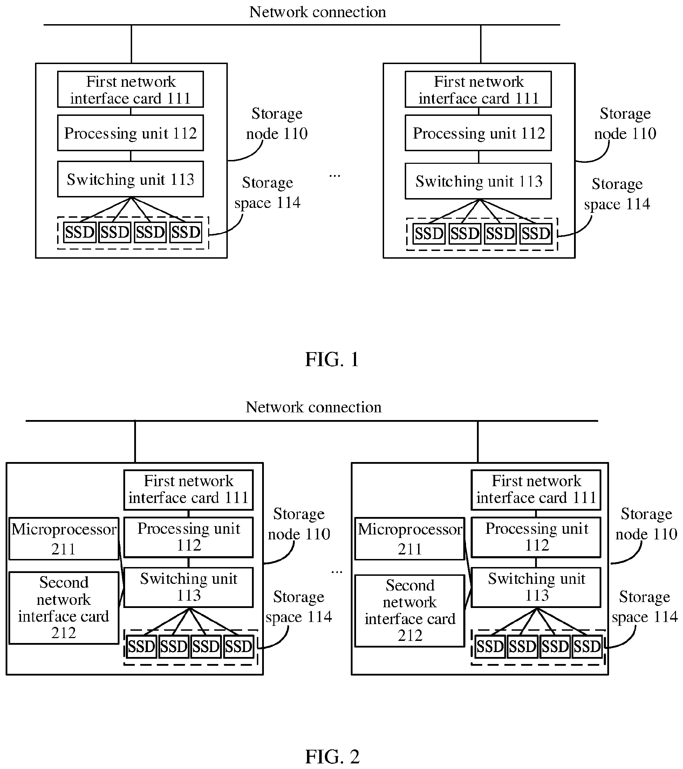

FIG. 1 is a schematic block diagram of a conventional storage system based on a storage network. The storage system shown in FIG. 1 includes at least one storage node 110, and a storage node in the storage system is connected to a network, so that a host accesses a storage device in each storage node in the storage system by using the network.

A second storage node may be any storage node in the storage system. A storage address corresponding to a storage device in the second storage node includes a target storage address that is to be accessed by the host by using the network. The second storage node includes a first network interface card 111, a processing unit 112, a switching unit 113, and a storage device 114. A network interface 111, the processing unit 112, the switching unit 113, and the storage device 114 are connected through an internal connection path.

The first network interface card 111 is configured to connect a storage node to the network, and may forward, to the processing unit 112, a data processing request sent by the host by using the network.

The processing unit 112 is configured to: process a data processing request received from a network interface, and convert the data processing request into a data processing request that can be directly processed by the storage device. For example, when the data processing request is an EC request, the processing unit is configured to: calculate raw data carried in the data processing request, generate a copy of the raw data, and generate an IO request that can be directly processed by the storage device. The IO request is used to store both the raw data and the copy in the storage device. It should be noted that the processing unit may be a CPU.

The switching unit 113 is configured to provide a communication path for the processing unit and a storage device that access the switching unit, to forward, from the processing unit, the data processing request that can be directly processed by the storage device to the storage device.

It should be noted that the switching unit may be a switch or a switching chip.

The storage device 114 provides storage space for data storage. Specifically, the storage device 114 may be a storage device including an SSD or a hard disk drive (Hard Disk Drive, HDD).

It should be noted that the storage device may be a storage device managed by a storage system based on a key value (key-value, KV), may be a storage device based on block device management, or may be a storage device based on document storage system management. This is not specifically limited in this embodiment of this application.

In the storage system shown in FIG. 1, an access path that is in the second storage node and that is used to access a storage device of the second storage node includes the first network interface card 111 and the processing unit 112. In other words, the host can access the storage device of the second storage node only through the access path in the second storage node. When the access path is faulty (for example, the access path is faulty because of a fault of the processing unit) or the access path is congested (for example, congestion caused when the processing unit performs a relatively large amount of calculation on a data processing request), the host may not be able to access the storage device of the second storage node, or the host needs to wait for a relatively long time to access the storage device of the second storage node.

To resolve the problem, in a manner of transmitting a data processing request in the embodiments of this application, a storage empty device of the second storage node may be accessed by using a network used for direct communication between storage nodes in the storage system. For ease of understanding, the storage system in the embodiments of this application is first briefly described.

FIG. 2 is a schematic block diagram of a storage system based on a network storage technology according to an embodiment of this application. It should be understood that functions of some units in the storage system shown in FIG. 2 are similar to those of some units in the storage system shown in FIG. 1. For brevity, refer to the foregoing descriptions. A same reference sign is used in the storage system in FIG. 1 and the storage system in FIG. 2.

The storage system shown in FIG. 2 includes at least one storage node 210, and a storage node in the storage system is connected to a network, so that a host accesses a storage device in each storage node in the storage system by using the network.

It should be noted that only units related to this embodiment of this application are listed in the storage system and the storage node shown in FIG. 2, and units included in another conventional storage system and storage node may be further included. This is not specifically limited in this embodiment of this application.

A second storage node may be any storage node in the storage system. A storage address corresponding to a storage device in the second storage node includes a target storage address that is to be accessed by the host by using the network. The second storage node includes a network interface 111, a processing unit 112, a switching unit 113, a storage device 114, a microprocessor 211, and a network connection function initiator 212. The network interface 111, the processing unit 112, the switching unit 113, the storage device 114, the microprocessor 211, and the network connection function initiator 212 are connected through an internal connection path.

The microprocessor 211 is configured to configure the switching unit, to ensure that a storage node other than the second storage node in the storage system can access the storage device in the second storage node by using the switching unit in the second storage node.

The second network interface card 212 is configured to connect the second storage node to the network, so that each storage node in the storage system can perform communication by using the network accessed by a second network.

It should be noted that the network accessed by the second storage node by using the second network interface card may be the same as a network accessed by the second storage node by using a first network interface card. In other words, the second storage node may access, by using the second network interface card and a network interface corresponding to the second network interface card, a network in which a storage node communicates with the host, to communicate with another storage node in the storage system by using the network.

The network accessed by the second storage node by using the second network interface card may be a network different from the network accessed by the second storage node by using the first network interface card. In other words, the second storage node may separately access two independent networks by using the first network interface card and the second network interface card. The network accessed by the second storage node by using the first network interface card may be a network in which the second storage node communicates with the host, and the network accessed by the second storage node by using the second network interface card may be a network in which the second storage node communicates with another storage node in the storage system.

It should be noted that the second network interface card may be a device that establishes a communication connection between storage nodes of the storage system by using a network. In different networks, second network interface cards may be different devices. Alternatively, according to different network protocols, the second network interface cards may be network interface cards that support different network protocols.

For example, in a network based on a small computer system interface (Small Computer System Interface, SCSI), the second network interface card may be a host bus adapter (Host Bus Adapter, HBA). The HBA is a circuit board or an integrated circuit adapter that provides input/output (Input/Output, I/O) processing and a physical connection between a server and a storage apparatus, namely, an I/O adapter that connects a host I/O bus to a storage system of a computer.

In a network based on a fibre channel (Fibre Channel, FC), the second network interface card may be a network adapter (Network Interface Card, NIC), and is configured to connect a storage node to a local area network. The second network interface card may be further configured to encapsulate to-be-transmitted data into the data in a format that can be identified by another device in the network, to transmit the data by using a network medium. Specifically, the second network interface card may be an Ethernet network interface card, an FC network interface card, an ISCSI network interface card, or the like.

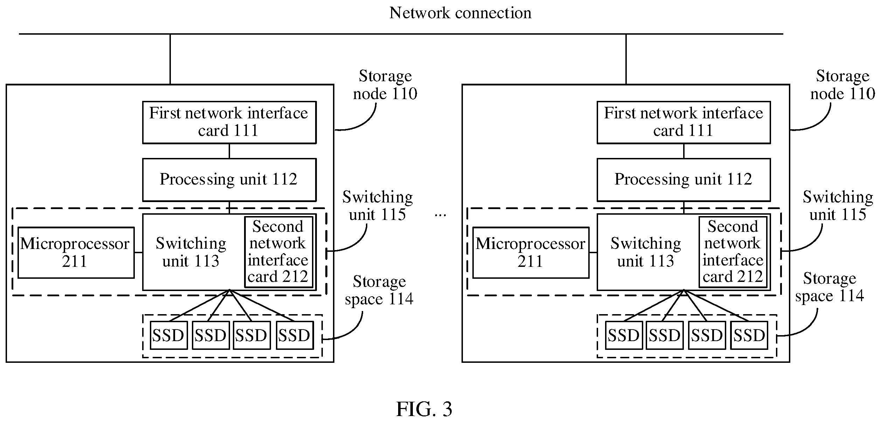

It should be understood that the second network interface card 212 and the switching unit 113 in the storage node shown in FIG. 2 may be physical units independent of each other. The second network interface card 212 may alternatively be a function module located inside the switching unit 113. For a specific structural diagram, refer to FIG. 3. FIG. 3 is a schematic block diagram of a storage system based on a network storage technology according to another embodiment of this application.

It should be further understood that the switching unit 113 and the microprocessor 211 may be physical units independent of each other. For a specific schematic structural diagram, refer to FIG. 2. The switching unit 113 and the microprocessor 211 may alternatively be located in a same physical unit. For a specific schematic structural diagram, refer to a switching unit 115 shown in FIG. 3.

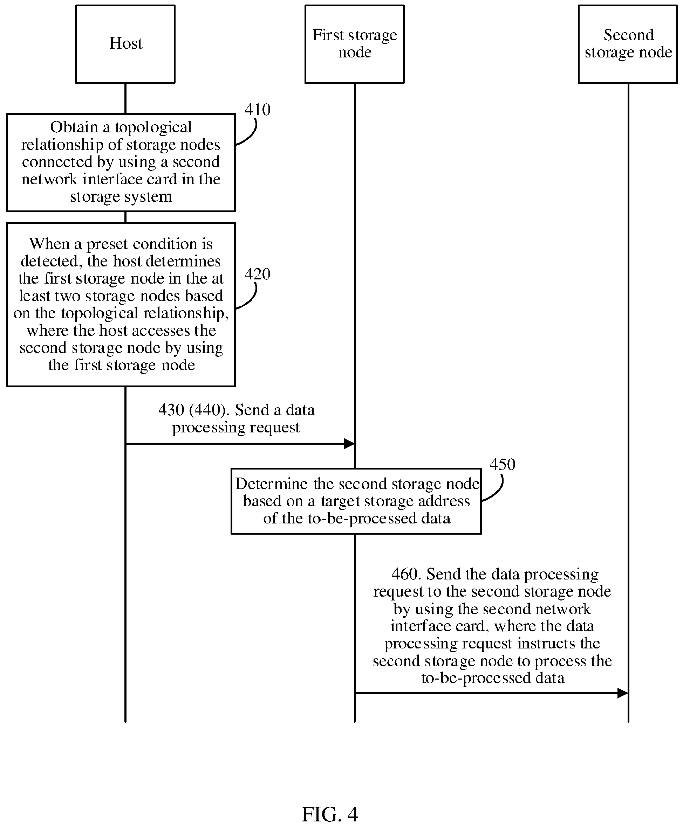

Based on the schematic block diagrams of the foregoing storage systems shown in FIG. 2 and FIG. 3, a method for transmitting a data processing request in the embodiments of this application is described below in detail with reference to FIG. 4. FIG. 4 is a schematic flowchart of a method for transmitting a data processing request according to an embodiment of this application.

The method shown in FIG. 4 may be applied to a storage system. The storage system includes a first storage node and a second storage node. A storage device in the first storage node is connected to a host by using a processor and a first network interface card of the first storage node, and is connected to a storage device of the second storage node by using a second network interface card. As shown in FIG. 4, the method includes the following steps.

410. Obtain a topological relationship of storage nodes connected by using the second network interface card in the storage system.

420. When a preset condition is detected, the host determines the first storage node in the at least two storage nodes based on the topological relationship, where the host accesses the second storage node by using the first storage node.

Specifically, when a storage device of the second storage node is accessed by using the first storage node, it may indicate that the storage device of the second storage node is accessed by using a network that is accessed by using the second network interface card of the first storage node and a second network interface card of the second storage node.

Optionally, the host determines, based on the topological relationship and a preset rule, the first storage node, to access the storage device of the second storage node. The preset rule is a rule for instructing the host to determine the first storage node.

The preset rule may be any one of the following rules.
1. The host determines the first storage node based on a feedback delay of a storage node in a current time period.
   Specifically, the host may send a data processing request to storage nodes in the storage system in the current time period, and determine the spend time between the time when the data processing request is to be sent and the time when the indication information which indicates successful execution of the data processing request is returned, and select a storage node with a relatively short spend time as the first storage node, to reduce, to some extent, a time used by the first storage node to forward a data processing request to the second storage node.
2. The host determines the first storage node based on a location between storage nodes in the storage system.

Specifically, the host may obtain location information of each storage node in the storage system, and determine a storage node closest to a location of the second storage node as the first storage node.

430. The host sends, to the first storage node, a data processing request used to access the storage device of the second storage node.

Optionally, in an embodiment, before step 430, the method further includes: determining that an access path of a storage node in which the target storage address is located is faulty or congested.

It should be noted that, if the data processing request is sent to the storage node in which the target storage address is located, and feedback that is specific to the data processing request and that is sent by the storage node in which the storage address is located is not received in a preset time period, it may be determined that the access path of the storage node in which the target storage address is located is faulty or congested. Alternatively, if a sounding signal is sent to the storage node in which the target storage address is located, and feedback that is specific to the sounding signal and that is sent by the storage node in which the storage address is located is not received in a preset time period, it may be determined that the access path of the storage node in which the target storage address is located is faulty or congested.

It should be further understood that the step of determining that the access path of the storage node in which the target storage address is located is faulty or congested may be performed before step 430 and after step 420, or may be performed between step 420 and step 410. A time of performing this step is not limited in this embodiment of this application.

Correspondingly, after the host sends the data processing request to the first storage node, the first storage node may perform the following operations.

440. The first storage node receives the data processing request to access the storage device of the second storage node, where the data processing request carries a target storage address of to-be-processed data.

The data processing request may be at least one of the following requests: an IO request used to access a target storage address, a GC request used to perform garbage collection (Garbage Collection, GC) among storage nodes in a storage system, a load balancing request, and a deduplication and compression request.

It should be understood that the to-be-processed data may be carried in the data processing request, or the to-be-processed data may be stored at the target storage address.

450. The first storage node determines the second storage node based on the target storage address of the to-be-processed data.

Optionally, in an embodiment, the target storage address includes an identifier of the second storage node and a logical address that is in the storage device of the second storage node and that is used to store the to-be-processed data.

Specifically, the first storage node may directly determine, based on the identifier of the second storage node that is carried in the data processing request, which storage node in the storage system is the first storage node.

It should be understood that an identifier of the storage node in which the target storage address is located may be an IP address of the storage node, or a number allocated by the host to each storage node in the storage system, and the number of each storage node is used to uniquely identify one storage node. This is not specifically limited in this embodiment of this application.

Optionally, in an embodiment, the storage system includes a plurality of storage nodes, and storage address ranges corresponding to different storage nodes in the plurality of storage nodes are not overlapped. Step 450 further includes: determining, by the first storage node based on the target storage address, a storage address range to which the target storage address belongs, and determining, by the first storage node, the second storage node based on the storage address range to which the target storage address belongs and a correspondence between a storage address range in the storage system and a storage node in the storage system.

Specifically, storage address ranges corresponding to storage devices in different storage nodes in the storage system are not overlapped. In other words, each storage address range can correspond to only one storage node. Therefore, the first storage node may directly determine, based on the storage address range to which the target storage address belongs, the storage node in which the storage address in the data processing request is located.

Optionally, in an embodiment, the storage system includes a plurality of storage nodes, and identifiers of storage devices in different storage nodes in the plurality of storage nodes are different. The data processing request carries an identifier of a storage device in which the target storage address of the to-be-processed data is located. Step 450 further includes: determining, by the first storage node based on the target storage address, a storage device corresponding to the target storage address, and determining, by the first storage node, the second storage node based on an identifier of the storage device corresponding to the target storage address and a correspondence between an identifier of a storage device and a storage node in the storage system.

It should be understood that the identifier of the storage device may be a number of the storage device in which the target storage address is located. For example, when the storage device is an SSD drive, the storage address may include a drive letter of the SSD drive in which the target storage address is located. For another example, when the storage device is an SSD drive, the storage address may include an IP address of the SSD drive in which the target storage address is located. For another example, when the storage device is an SSD drive, the storage address may include a storage device address of the SSD drive in which the target storage address is located.

460. The first storage node sends the data processing request to the second storage node by using the second network interface card, where the data processing request instructs the second storage node to process the to-be-processed data.

It should be noted that the data processing request may be processed by using a processing unit in the first storage node, and the processed data processing request that can be directly processed by a storage device is sent by a network interface card of the first storage device to a network interface card of the second storage device by using networking between switching units, to access the storage device of the second storage node.

Alternatively, the data processing request may be sent to the second network interface card in the first storage node by using a processing unit in the first storage node. In this case, the processing unit in the first storage node may not process the data processing request, and the second network interface card in the first storage device sends the data processing request to the second storage device, to access the storage device in the second storage node.

To further learn the method for transmitting a data processing request in this embodiment of this application, a data access scenario and a data migration scenario are used as examples for detailed description below.

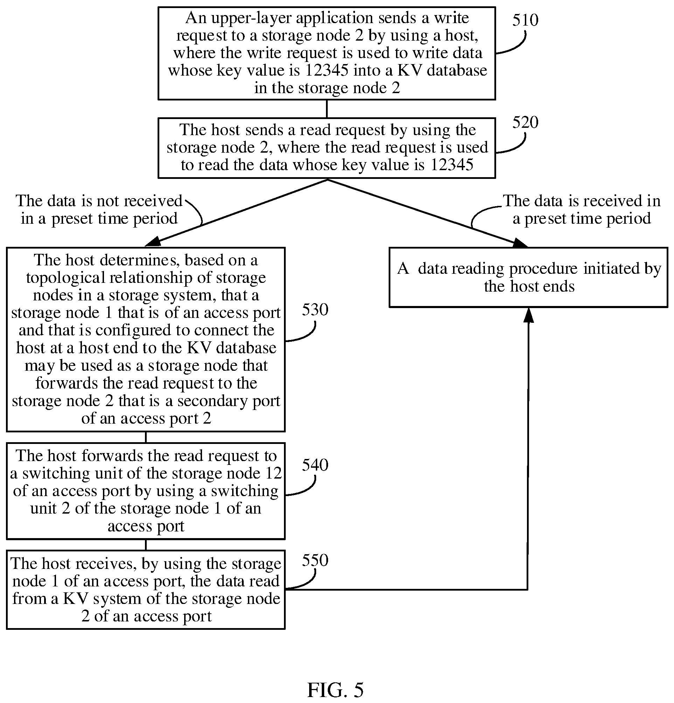

FIG. 5 is a schematic flowchart of a method for transmitting a data processing request in a data access scenario according to an embodiment of this application. The method shown in FIG. 5 includes the following steps.

*510.* An upper-layer application sends a write request to a storage node 2 by using a host, where the write request is used to write data whose key value is 12345 into a KV system in the storage node 2.

Specifically, the upper-layer application sends the write request to the storage node 2 by using the host, to write the data whose key value is 12345 to the KV storage system in the storage node 2 through an access path in the storage node 2.

520. The host sends a read request to the storage node 2, where the read request is used to read the data whose key value is 12345 in the storage node 2.

Specifically, if the host does not receive, in a preset time period, the data requested by the read request, step 530 to step 550 are performed. If the host receives, in a preset time period, the data requested by the read request, a data reading procedure initiated by the host ends.

530. The host determines, based on a topological relationship between storage nodes in a storage system, that a KV storage system in the storage node 2 may be accessed through an access path in a storage node 1.

Specifically, the read request may be sent to a switching unit of the storage node 2 by using a switching unit of the storage node 1, to access the KV storage system of the storage node 2.

It should be noted that step 530 may be performed when the host is initialized, or may be performed after the host performs step 520. A time of performing step 530 is not specifically limited in this embodiment of this application.

540. The host forwards the read request to the switching unit of the storage node 2 by using the switching unit of the storage node 1.

550. The host receives, by using the storage node 1, the data read from the KV storage system of the storage node 2.

Specifically, the data whose key value is 12345 is returned from the KV storage system of the storage node 2 to the host. The data may be forwarded to the switching unit of the storage node 1 by using the switching unit of the storage node 2, and finally returned to the host from the storage node 1, so that a current process of reading data by the host is completed.

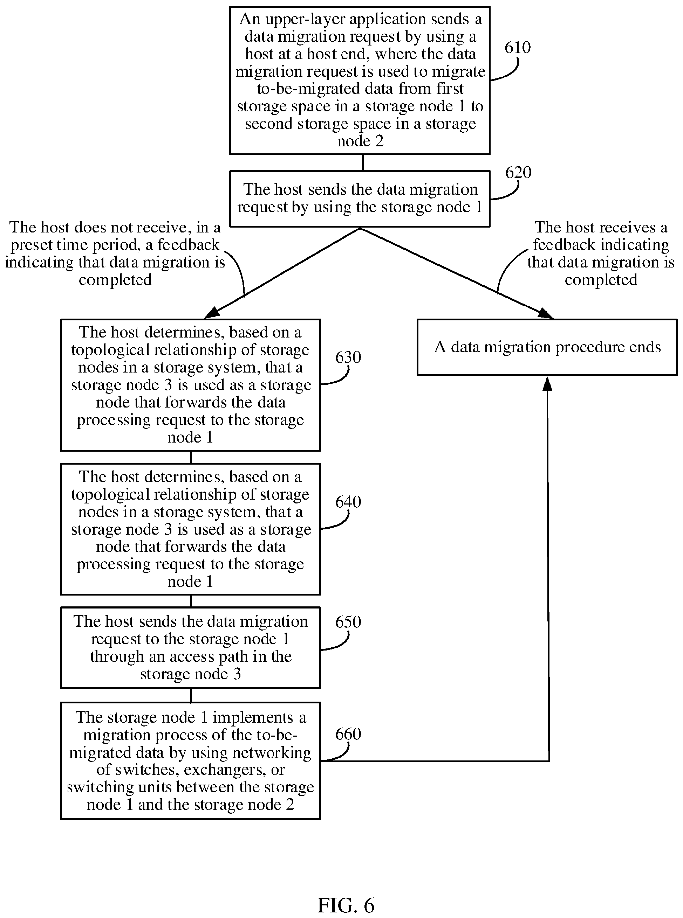

The foregoing second network interface card in a storage node may be located in a switching unit of the storage node. With reference to FIG. 6, the method for transmitting a data processing request in a data migration scenario is described by using an example in which a second network interface card in a storage node may be located in a switching unit of the storage node.

FIG. 6 is a schematic flowchart of a method for transmitting a data processing request in a data migration scenario according to an embodiment of this application. The method shown in FIG. 6 includes the following steps.

610. An upper-layer application sends a data migration request by using a host, where the data migration request is used to migrate to-be-migrated data from a first storage device in a storage node 1 to a second storage device in a storage node 2.

Specifically, the data migration request may carry a storage address of the first storage device and a storage address of the second storage device.

620. The host sends the data migration request by using the storage node 1.

Specifically, if the host does not receive, in a preset time period, feedback information indicating that data migration succeeds, step 630 to step 650 are performed. If the host receives, in a preset time period, feedback information indicating that data migration succeeds, the data migration procedure ends.

It should be noted that, when the host does not receive, in the preset time period, the feedback information indicating that data migration succeeds, it may indicate that the host receives feedback information indicating that the data migration fails, or the host receives, in the preset time period, neither the feedback information indicating that the data migration succeeds, or nor the feedback information indicating that the data migration fails.

630. The host determines, based on a topological relationship between storage nodes in a storage system, that a storage node 3 is used as a storage node that forwards the data processing request to the storage node 1.

Specifically, the host determines that the storage node 3 adjacent to the storage node 1 in the storage system is used as the storage node that forwards the data processing request to the storage node 1. To be specific, the data migration request is sent to a switching unit in the storage node 1 through an access path in the storage node 3, so that the switching unit in the storage node 1 sends the data migration request to a storage device in the storage node 1.

It should be noted that step 630 may be performed when the host is initialized, or may be performed after the host performs step 620. A time of performing the step is not specifically limited in this embodiment of this application.

It should be further understood that the storage node 3 and the storage node 2 may be the same storage node, or the storage node 3 and the storage node 2 may be different storage nodes. This is not limited in this embodiment of this application.

640. The host sends the data migration request to the storage node 1 through the access path in the storage node 3.

Specifically, after processing the data migration request through the access path in the storage node 3 to obtain a request that can be directly executed by a storage device, the host sends the data migration request to the switching unit in the storage node 1 by using networking of switching units between the storage node 3 and the storage node 1.

650. The storage node 1 implements a migration process of the to-be-migrated data by using networking of switching units between the storage node 1 and the storage node 2.

It should be noted that, when the to-be-migrated data is transmitted by using the networking of switching units between the storage node 1 and the storage node 2, if a processing unit in the storage node 1 is not required to calculate the data, the to-be-migrated data may be directly sent from the first storage device in the storage node 1 to the second storage device in the storage node 2. If a processing unit in the storage node 1 is required to calculate the data, the to-be-migrated data may be processed by using a microprocessor in the storage node 1, and processed data is sent to the storage node 2 by using a second network interface card in the storage node 1.

A process of processing the to-be-migrated data by using the microprocessor of the first storage node is the same as a conventional process of calculating the to-be-migrated data by using the processing unit of the first storage node. Details are not described herein again.

It should be further understood that, in the method shown in FIG. 6, only the data migration request transmission method used when the access path in the storage node 1 is faulty or congested is listed. This embodiment of this application may further be applied to a data migration request transmission method used after an access path in the storage node 2 is faulty or congested. Because transmission manners are basically the same, details are not described herein again for brevity.

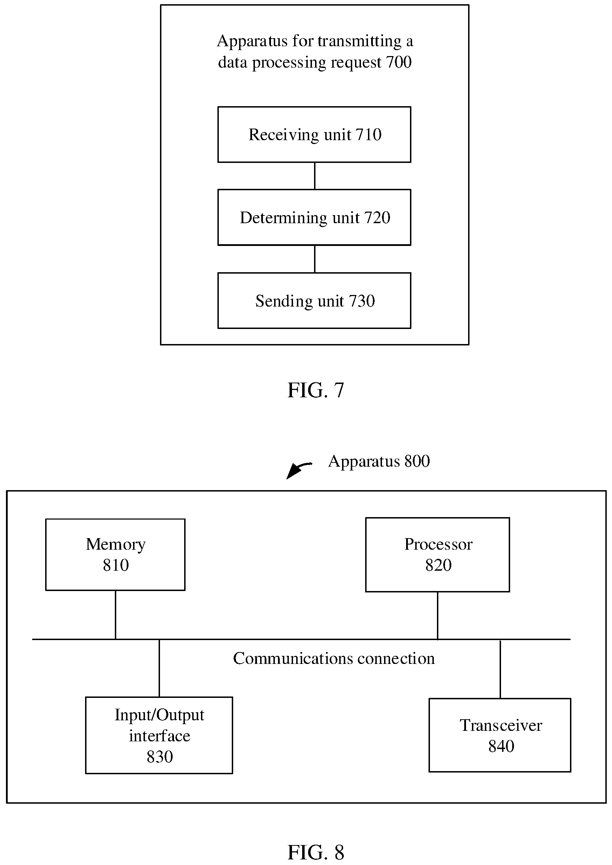

Methods for transmitting a data processing request in the embodiments of this application are described above in detail with reference to FIG. 1 to FIG. 6. Apparatuses for transmitting a data processing request in the embodiments of this application are briefly described below with reference to FIG. 7 to FIG. 10. It should be understood that apparatuses shown in FIG. 7 to FIG. 10 may implement the methods described above. For brevity, details are not described herein again.

FIG. 7 is a schematic block diagram of an apparatus for transmitting a data processing request according to an embodiment of this application. An apparatus 700 for transmitting a data processing request that is shown in FIG. 7 includes a receiving unit 710, a determining unit 720, and a sending unit 730. The apparatus 700 may be applied to a storage system. The storage system includes a first storage node and a second storage node. A storage device in the first storage node is connected to a host by using a processor and a first network interface card of the first storage node, and is connected to a storage device of the second storage node by using a second network interface card.

The receiving unit 710 is configured to receive a data processing request to access the storage device of the second storage node, where the data processing request carries a target storage address of to-be-processed data.

The determining unit 720 is configured to determine the second storage node based on the target storage address of the to-be-processed data.

The sending unit 730 is configured to send the data processing request to the second storage node by using the second network interface card, where the data processing request instructs the second storage node to process the to-be-processed data.

Optionally, in an embodiment, the target storage address includes an identifier of the second storage node and a logical address that is in the storage device of the second storage node and that is used to store the to-be-processed data.

Optionally, in an embodiment, the storage system includes a plurality of storage nodes, and storage address ranges corresponding to different storage nodes in the plurality of storage nodes are not overlapped. That the determining unit is further configured to determine the second storage node based on the target storage address of the to-be-processed data includes the following: The determining unit is further configured to determine, based on the target storage address, a storage address range to which the target storage address belongs; and the determining unit is further configured to determine the second storage node based on the storage address range to which the target storage address belongs and a correspondence between a storage address range in the storage system and a storage node in the storage system.

Optionally, in an embodiment, the receiving unit is further configured to receive the correspondence that is between a storage address range in the storage system and a storage node in the storage system and that is sent by the host.

In an optional embodiment, the receiving unit and the sending unit may be a transceiver 840, the determining unit may be a processor 820, and the apparatus for transmitting a data processing request may further include an input/output interface 830 and a memory 810. Details are shown in FIG. 8.

FIG. 8 is a schematic block diagram of an apparatus for transmitting a data processing request according to another embodiment of this application. The apparatus 800 shown in FIG. 8 may include a memory 810, a processor 820, an input/output interface 830, and a transceiver 840. The memory 810, the processor 820, the input/output interface 830, and the transceiver 840 are connected through an internal connection path. The memory 810 is configured to store an instruction. The processor 820 is configured to execute the instruction stored in the memory 820, to control the input/output interface 830 to receive input data and information, or output data such as an operation result, and control the transceiver 840 to send a signal.

The transceiver 840 is configured to receive a data processing request to access a storage device of the second storage node, where the data processing request carries a target storage address of to-be-processed data.

The processor 820 is configured to determine the second storage node based on the target storage address of the to-be-processed data.

The transceiver 840 is configured to send the data processing request to the second storage node by using the second network interface card, where the data processing request instructs the second storage node to process the to-be-processed data.

It should be understood that, in this embodiment of this application, the processor 820 may be a general-purpose central processing unit (Central Processing Unit, CPU), a microprocessor, an application specific integrated circuit (Application Specific Integrated Circuit, ASIC), or one or more integrated circuits, and is configured to execute a related program, to implement the technical solutions provided in the embodiments of this application.

It should be further understood that the transceiver 840 is also referred to as a communications interface, and a transceiver apparatus, for example, but not limited to, a transceiver, is used to implement communication between the terminal 800 and another device or a communications network.

The memory 810 may include a read-only memory and a random access memory, and provide an instruction and data to the processor 820. A part of the processor 820 may further include a non-volatile random access memory. For example, the processor 820 may further store information of a device type.

In an implementation process, steps in the foregoing methods can be implemented by using a hardware integrated logical circuit in the processor 820, or by using instructions in a form of software. The method for transmitting a data processing request disclosed with reference to the embodiments of this application may be directly performed by a hardware processor, or may be performed by using a combination of hardware and a software module in the processor. A software module may be located in a mature storage medium in the art, such as a random access memory, a flash memory, a read-only memory, a programmable read-only memory, an electrically erasable programmable memory, a register, or the like. The storage medium is located in the memory 810, and a processor 820 reads information in the memory 810 and completes the steps in the foregoing methods in combination with hardware of the processor. To avoid repetition, details are not described herein again.

It should be understood that, the processor in the embodiments of this application may be a central processing unit (central processing unit, CPU), or may further be another general purpose processor, a digital signal processor (digital signal processor, DSP), an application-specific integrated circuit (application specific integrated circuit, ASIC), a field programmable gate array (field programmable gate array, FPGA), or another programmable logical device, a discrete gate or transistor logical device, a discrete hardware component, or the like. The general purpose processor may be a microprocessor, or the processor may be any conventional processor or the like.

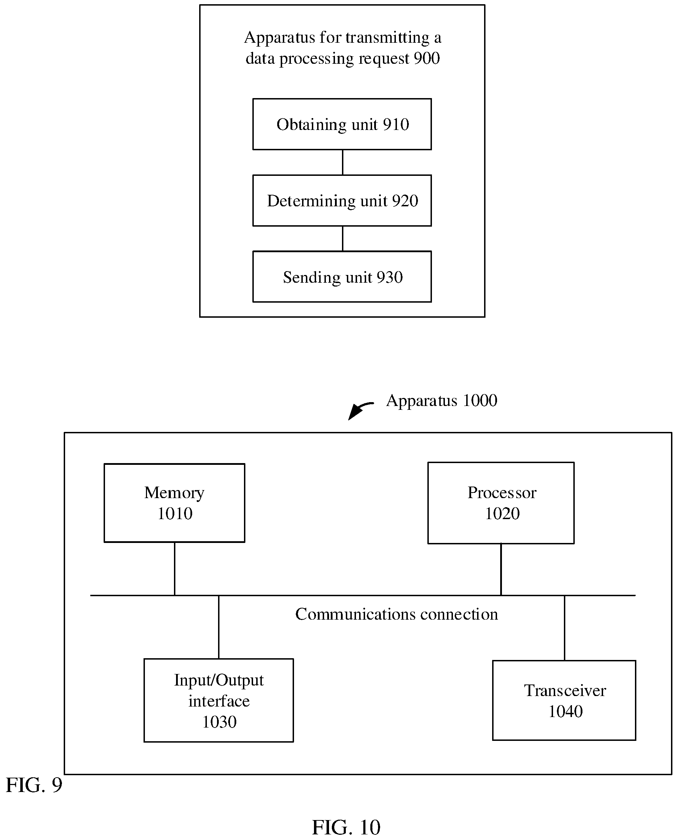

FIG. 9 is a schematic block diagram of an apparatus for transmitting a data processing request according to an embodiment of this application. The apparatus 900 shown in FIG. 9 may be applied to a host, where the host is connected to a storage system, the storage system includes at least two storage nodes, each storage node is connected to the host by using a first network interface card, and is connected to another storage node by using a second network interface card, and the apparatus includes:
an obtaining unit 910, configured to obtain a topological relationship of storage nodes connected by using the second network interface card in the storage system;
a determining unit 920, configured to: when a preset condition is detected, determine a first storage node in the at least two storage nodes based on the topological relationship, where the host accesses a second storage node by using the first storage node; and
a sending unit 930, configured to send, to the first storage node, a data processing request used to access a storage device of the second storage node.

Optionally, in an embodiment, the sending unit is further configured to:
send a correspondence between a storage address range in the storage system and a storage node in the storage system to the first storage node.

In an optional embodiment, the obtaining unit and the sending unit may be a transceiver 1040, the determining unit may be a processor 1020, and the apparatus for transmitting a data processing request may further include an input/output interface 1030 and a memory 1010. Details are shown in FIG. 10.

FIG. 10 is a schematic block diagram of an apparatus for transmitting a data processing request according to another embodiment of this application. The apparatus 1000 shown in FIG. 10 may include a memory 1010, a processor 1020, an input/output interface 1030, and a transceiver 1040. The memory 1010, the processor 1020, the input/output interface 1030, and the transceiver 1040 are connected through an internal connection path. The memory 1010 is configured to store an instruction. The processor 1020 is configured to execute the instruction stored in the memory 1020, to control the input/output interface 1030 to receive input data and information, or output data such as an operation result, and control the transceiver 1040 to send a signal.

The transceiver 1040 is configured to obtain a topological relationship of a storage nodes connected by using a second network interface card in the storage system.

The processor 1020 is further configured to: when a preset condition is detected, determine a first storage node in the at least two storage nodes based on the topological relationship, where the host accesses a second storage node by using the first storage node.

The transceiver 1040 is configured to send, to the first storage node, a data processing request used to access a storage device of the second storage node.

It should be understood that, in this embodiment of this application, the processor 1020 may be a general-purpose central processing unit (Central Processing Unit, CPU), a microprocessor, an application-specific integrated circuit (Application Specific Integrated Circuit, ASIC), or one or more integrated circuits, and is configured to execute a related program, to implement the technical solutions provided in the embodiments of this application.

It should be further understood that the transceiver 1040 is also referred to as a communications interface, and a transceiver apparatus, for example, but not limited to, a transceiver, is used to implement communication between the terminal 1000 and another device or a communications network.

The memory 1010 may include a read-only memory and a random access memory, and provide an instruction and data to the processor 1020. A part of the processor 1020 may further include a non-volatile random access memory. For example, the processor 1020 may further store information of a device type.

In an implementation process, steps in the foregoing methods can be implemented by using a hardware integrated logical circuit in the processor 1020, or by using instructions in a form of software. The method for transmitting a data processing request disclosed with reference to the embodiments of this application may be directly performed by a hardware processor, or may be performed by using a combination of hardware and a software module in the processor. A software module may be located in a mature storage medium in the art, such as a random access memory, a flash memory, a read-only memory, a programmable read-only memory, an electrically erasable programmable memory, a register, or the like. The storage medium is located in the memory 1010, and the processor 1020 reads information in the memory 1010 and completes the steps in the foregoing methods in combination with hardware of the processor. To avoid repetition, details are not described herein again.

It should be understood that, the processor in the embodiments of this application may be a central processing unit (central processing unit, CPU), or may further be another general purpose processor, a digital signal processor (digital signal processor, DSP), an application-specific integrated circuit (application specific integrated circuit, ASIC), a field programmable gate array (field programmable gate array, FPGA), or another programmable logical device, a discrete gate or transistor logical device, a discrete hardware component, or the like. The general purpose processor may be a microprocessor, or the processor may be any conventional processor or the like.

It should be understood that in the embodiments of this application, "B corresponding to A" indicates that B is associated with A, and B may be determined according to A. However, it should further be understood that determining B according to A does not mean that B is determined according to A only; that is, B may also be determined according to A and/or other information.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of this application.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communications connections may be implemented by using some interfaces. The indirect couplings or communications connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible to a computer, or a data storage device, such as a server or a data center, integrating one or more usable media. The usable medium may be a magnetic medium (for example, a floppy disk, a hard disk, a magnetic tape), an optical medium (for example, a digital versatile disc (Digital Versatile Disc, DVD)), or a semiconductor medium (for example, a solid state disk (Solid State Disk, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for transmitting a data processing request, wherein a second storage node comprises a storage device (114), a first network interface card (111) that connects the second storage node to a host, a switching unit (113) and a second network interface card (212), wherein the second network interface card (212), the switching unit (113), and the storage device are connected through an internal connection path of the second storage node, the method comprises:
receiving (460), by the second network interface card, a data processing request of the host from a first storage node, wherein the data processing request comprises to-be-processed data;
forwarding, via the switching unit (113) and the internal connection path the to-be-processed data received via the second network interface card to the storage device for storing.

2. The method according to claim 1, wherein the method further comprises:
receiving (440), by the first storage node, the data processing request from a host;
determining (450), by the first storage node, the second storage node based on the data processing request; and
sending (460), by the first storage node, the data processing request to the second network interface card (212) of the second storage node.

3. The method according to claim 2, wherein the step of (450) determining the second storage node based on the data processing request comprising:
determining, by the first storage node, the second storage node based on a target storage address of the to-be-processed data, wherein the data processing request further comprises the target storage address of the to-be-processed data.

4. The method according to claim 2, wherein the method further comprises:
converting, by the first storage node, the data processing request into a data processing request which is able to be directly processed by the storage device.

5. The method according to claim 1, wherein the method further comprises:
receiving, by the first network interface card (111) of the second storage node, a data processing request from the host, wherein the data processing request comprises a to-be-processed data;
processing, by a central processing unit (112) of the second storage node, the data processing request; and
sending, by the central processing unit, the to-be-processed data to the storage device (114) for storing.

6. A second network interface card (212), wherein a second storage node comprises a storage device (114), a first network interface card (111) that connects the second storage node to a host, a switching unit (113) , and the second network interface card, wherein the switching unit (113), the second network interface card (212), and the storage device are connected through an internal connection path of the second storage node, the second network interface card is configured to:
receive (460) a data processing request of the host from a first storage node, wherein the data processing request comprises to-be-processed data; and
provide the received to-be-processed data to the switching unit of the second storage node for forwarding via the internal connection path to the storage device.

7. A second storage node for transmitting a data processing request, comprising a storage device (114) and the second network interface card (212) according to claim 6, wherein the storage device is configured to store the to-be-processed data received via the second network interface card and forwarded by the switching unit of the second storage node via the internal connection path.

8. A system for transmitting a data processing request comprising the second storage node according to claim 7 and a first storage node, wherein the first storage node is configured to:
receive (440) the data processing request from a host;
determine (450) the second storage node based on the data processing request; and
send (460) the data processing request to the second network interface card (212) of the second storage node.

9. The system according to claim 8, wherein the first storage node is configured to:
determine the second storage node based on a target storage address of the to-be-processed data, wherein the data processing request further comprises the target storage address of the to-be-processed data.

10. The system according to claim 8, wherein the first storage node is further configured to:
convert the data processing request received from the host into a data processing request which is able to be directly processed by the storage device (114).

11. The second storage node according to claim 7, wherein the second storage node comprises:
a first network interface card (111) that connects the second storage node to a host, configured to receive a data processing request from the host, wherein the data processing request comprises to-be-processed data;
a central processing unit (112) configured to process the data processing request; and
the central processing unit is further configured to send the to-be-processed data to the storage device (114) for storing.

## Patentansprüche

1. Verfahren zum Übertragen einer Datenverarbeitungsanfrage, wobei ein zweiter Speicherknoten eine Speichervorrichtung (114), eine erste Netzwerkschnittstellenkarte (111), die den zweiten Speicherknoten mit einem Host verbindet, eine Schalteinheit (113) und eine zweite Netzwerkschnittstellenkarte (212) umfasst, wobei die zweite Netzwerkschnittstellenkarte (212), die Schalteinheit (113) und die Speichervorrichtung durch einen internen Verbindungspfad des zweiten Speicherknotens verbunden sind, wobei das Verfahren umfasst:
Empfangen (460), durch die zweite Netzwerkschnittstellenkarte, einer Datenverarbeitungsanfrage des Hosts von einem ersten Speicherknoten, wobei die Datenverarbeitungsanfrage zu verarbeitende Daten umfasst;
Weiterleiten, über die Schalteinheit (113) und den internen Verbindungspfad der zu verarbeitenden Daten, die über die zweite Netzwerkschnittstellenkarte empfangen werden, an die Speichervorrichtung zum Speichern.

2. Verfahren nach Anspruch 1, wobei das Verfahren ferner umfasst:
Empfangen (440), durch den ersten Speicherknoten, der Datenverarbeitungsanfrage von einem Host;
Bestimmen (450), durch den ersten Speicherknoten, des zweiten Speicherknotens basierend auf der Datenverarbeitungsanfrage; und
Senden (460), durch den ersten Speicherknoten, der Datenverarbeitungsanfrage an die zweite Netzwerkschnittstellenkarte (212) des zweiten Speicherknotens.

3. Verfahren nach Anspruch 2, wobei der Schritt des (450) Bestimmens des zweiten Speicherknotens basierend auf der Datenverarbeitungsanfrage umfasst:
Bestimmen, durch den ersten Speicherknoten, des zweiten Speicherknotens basierend auf einer Zielspeicheradresse der zu verarbeitenden Daten, wobei die Datenverarbeitungsanfrage ferner die Zielspeicheradresse der zu verarbeitenden Daten umfasst.

4. Verfahren nach Anspruch 2, wobei das Verfahren ferner umfasst:
Umwandeln, durch den ersten Speicherknoten, der Datenverarbeitungsanfrage in eine Datenverarbeitungsanfrage, die durch die Speichervorrichtung direkt verarbeitet werden kann.

5. Verfahren nach Anspruch 1, wobei das Verfahren ferner umfasst:
Empfangen, durch die erste Netzwerkschnittstellenkarte (111) des zweiten Speicherknotens, einer Datenverarbeitungsanfrage von dem Host, wobei die Datenverarbeitungsanfrage zu verarbeitende Daten umfasst;
Verarbeiten, durch eine zentrale Verarbeitungseinheit (112) des zweiten Speicherknotens, der Datenverarbeitungsanfrage; und
Senden, durch die zentrale Verarbeitungseinheit, der zu verarbeitenden Daten an die Speichervorrichtung (114) zum Speichern.

6. Zweite Netzwerkschnittstellenkarte (212), wobei ein zweiter Speicherknoten eine Speichervorrichtung (114), eine erste Netzwerkschnittstellenkarte (111), die den zweiten Speicherknoten mit einem Host verbindet, eine Schalteinheit (113) und die zweite Netzwerkschnittstellenkarte umfasst, wobei die Schalteinheit (113), die zweite Netzwerkschnittstellenkarte (212) und die Speichervorrichtung durch einen internen Verbindungspfad des zweiten Speicherknotens verbunden sind, wobei die zweite Netzwerkschnittstellenkarte konfiguriert ist zum:
Empfangen (460) einer Datenverarbeitungsanfrage des Hosts von einem ersten Speicherknoten, wobei die Datenverarbeitungsanfrage zu verarbeitende Daten umfasst; und
Bereitstellen der empfangenen zu verarbeitenden Daten der Schalteinheit des zweiten Speicherknotens zum Weiterleiten über den internen Verbindungspfad an die Speichervorrichtung.

7. Zweiter Speicherknoten zum Übertragen einer Datenverarbeitungsanfrage, der eine Speichervorrichtung (114) und die zweite Netzwerkschnittstellenkarte (212) nach Anspruch 6 umfasst, wobei die Speichervorrichtung konfiguriert ist, um die zu verarbeitenden Daten, die über die zweite Netzwerkschnittstellenkarte empfangen und durch die Schalteinheit des zweiten Speicherknotens über den internen Verbindungspfad weitergeleitet werden, zu speichern.

8. System zum Übertragen einer Datenverarbeitungsanfrage, das den zweiten Speicherknoten nach Anspruch 7 und einen ersten Speicherknoten umfasst, wobei der erste Speicherknoten konfiguriert ist zum:
Empfangen (440) der Datenverarbeitungsanfrage von einem Host;
Bestimmen (450) des zweiten Speicherknotens basierend auf der Datenverarbeitungsanfrage; und
Senden (460) der Datenverarbeitungsanfrage an die zweite
Netzwerkschnittstellenkarte (212) des zweiten Speicherknotens.

9. System nach Anspruch 8, wobei der erste Speicherknoten konfiguriert ist zum:
Bestimmen des zweiten Speicherknotens basierend auf einer Zielspeicheradresse der zu verarbeitenden Daten, wobei die Datenverarbeitungsanfrage ferner die Zielspeicheradresse der zu verarbeitenden Daten umfasst.

10. System nach Anspruch 8, wobei der erste Speicherknoten ferner konfiguriert ist zum:
Umwandeln der Datenverarbeitungsanfrage, die von dem Host empfangen wird, in eine Datenverarbeitungsanfrage, die durch die Speichervorrichtung (114) direkt verarbeitet werden kann.

11. Zweiter Speicherknoten nach Anspruch 7, wobei der zweite Speicherknoten umfasst:
eine erste Netzwerkschnittstellenkarte (111), die den zweiten Speicherknoten mit einem Host verbindet, der konfiguriert ist, um eine Datenverarbeitungsanfrage von dem Host zu empfangen, wobei die Datenverarbeitungsanfrage zu verarbeitende Daten umfasst;
eine zentrale Verarbeitungseinheit (112), die konfiguriert ist, um die Datenverarbeitungsanfrage zu verarbeiten; und
die zentrale Verarbeitungseinheit ferner konfiguriert ist, um die zu verarbeitenden Daten zum Speichern an die Speichervorrichtung (114) zu senden.

## Revendications

1. Procédé permettant de transmettre une demande de traitement de données, dans lequel un second nœud de stockage comprend un dispositif de stockage (114), une première carte d'interface réseau (111) qui connecte le second nœud de stockage à un hôte, une unité de commutation (113) et une seconde carte d'interface réseau (212), dans lequel la seconde carte d'interface réseau (212), l'unité de commutation (113), et le dispositif de stockage sont connectés à travers un chemin de connexion interne du second nœud de stockage, le procédé comprend :
la réception (460), par la seconde carte d'interface réseau, d'une demande de traitement de données de l'hôte provenant d'un premier nœud de stockage, dans lequel la demande de traitement de données comprend des données à traiter ;
le transfert, par l'intermédiaire de l'unité de commutation (113) et d'un chemin de connexion interne, des données à traiter reçues par l'intermédiaire de la seconde carte d'interface réseau au dispositif de stockage pour stockage.

2. Procédé selon la revendication 1, dans lequel le procédé comprend en outre :
la réception (440), par le premier nœud de stockage, de la demande de traitement de données provenant d'un hôte ;
la détermination (450), par le premier nœud de stockage, du second nœud de stockage sur la base de la demande de traitement de données ; et
l'envoi (460), par le premier nœud de stockage, de la demande de traitement de données à la seconde carte d'interface réseau (212) du second nœud de stockage.

3. Procédé selon la revendication 2, dans lequel l'étape consistant à (450) déterminer le second nœud de stockage sur la base de la demande de traitement de données comprenant :
la détermination, par le premier nœud de stockage, du second nœud de stockage sur la base d'une adresse de stockage cible des données à traiter, dans lequel la demande de traitement de données comprend en outre l'adresse de stockage cible des données à traiter.

4. Procédé selon la revendication 2, dans lequel le procédé comprend en outre :
la conversion, par le premier nœud de stockage, de la demande de traitement de données en une demande de traitement de données pouvant être directement traitée par le dispositif de stockage.

5. Procédé selon la revendication 1, dans lequel le procédé comprend en outre :
la réception, par la première carte d'interface réseau (111) du second nœud de stockage, d'une demande de traitement de données provenant de l'hôte, dans lequel la demande de traitement de données comprend des données à traiter ;
le traitement, par une unité centrale de traitement (112) du second nœud de stockage, de la demande de traitement de données ; et
l'envoi, par l'unité centrale de traitement, des données à traiter au dispositif de stockage (114) pour stockage.

6. Seconde carte d'interface réseau (212), dans laquelle un second nœud de stockage comprend un dispositif de stockage (114), une première carte d'interface réseau (111) qui connecte le second nœud de stockage à un hôte, une unité de commutation (113) et la seconde carte d'interface réseau, dans laquelle l'unité de commutation (113), la seconde carte d'interface réseau (212) et le dispositif de stockage sont connectés par le biais d'un chemin de connexion interne du second nœud de stockage, la seconde carte d'interface réseau est configurée pour :
recevoir (460) une demande de traitement de données de l'hôte provenant d'un premier nœud de stockage, dans lequel la demande de traitement de données comprend des données à traiter ; et
fournir les données à traiter reçues à l'unité de commutation du second nœud de stockage pour les transférer par l'intermédiaire du chemin de connexion interne vers le dispositif de stockage.

7. Second nœud de stockage permettant de transmettre une demande de traitement de données, comprenant un dispositif de stockage (114) et la seconde carte d'interface réseau (212) selon la revendication 6, dans lequel le dispositif de stockage est configuré pour stocker les données à traiter reçues par l'intermédiaire de la seconde carte d'interface réseau et transférées par l'unité de commutation du second nœud de stockage par l'intermédiaire du chemin de connexion interne.

8. Système permettant de transmettre une demande de traitement de données comprenant le second nœud de stockage selon la revendication 7 et un premier nœud de stockage, dans lequel le premier nœud de stockage est configuré pour :
recevoir (440) la demande de traitement de données à partir d'un hôte ;
déterminer (450) le second nœud de stockage sur la base de la demande de traitement de données ; et
et envoyer (460) la demande de traitement de données à la seconde carte d'interface réseau (212) du second nœud de stockage.

9. Système selon la revendication 8, dans lequel le premier nœud de stockage est configuré pour :
déterminer le second nœud de stockage sur la base d'une adresse de stockage cible des données à traiter, dans lequel la demande de traitement de données comprend en outre l'adresse de stockage cible des données à traiter.

10. Système selon la revendication 8, dans lequel le premier nœud de stockage est en outre configuré pour :
convertir la demande de traitement de données reçue en provenance de l'hôte en une demande de traitement de données pouvant être directement traitée par le dispositif de stockage (114).

11. Second nœud de stockage selon la revendication 7, dans lequel le second nœud de stockage comprend :
une première carte d'interface réseau (111) qui connecte le second nœud de stockage à un hôte, configuré pour recevoir une demande de traitement de données en provenance de l'hôte, dans lequel la demande de traitement de données comprend des données à traiter ;
une unité centrale de traitement (112) configurée pour traiter la demande de traitement de données ; et
l'unité centrale de traitement est en outre configurée pour envoyer les données à traiter au dispositif de stockage (114) pour stockage.
